# EUROPÄISCHE PATENTSCHRIFT

(11) **EP 2 890 512 B1**
(45) Veröffentlichungstag und Bekanntmachung des Hinweises auf die Patenterteilung: **17.08.2016**
(21) Anmeldenummer: 13763005.9
(22) Anmeldetag: 28.08.2013
(51) Int. Cl.: B23B 31/26, G01M 1/04

(54) **SPANNVORRICHTUNG**
CLAMPING DEVICE
DISPOSITIF DE SERRAGE

(30) Priorität: 30.08.2012 DE 102012108066
(43) Veröffentlichungstag der Anmeldung: 08.07.2015
(73) Patentinhaber: Schenck RoTec GmbH, 64293 Darmstadt (DE)
(72) Erfinder: BUSCHBECK, Andreas, 64404 Bickenbach (DE); BREITWIESER, Matthias, 64823 Groß-Umstadt (DE); PEITER, Dieter, 64280 Roßdorf (DE); STORK, Angelika, 64291 Darmstadt (DE)
(74) Vertreter: Haar, Lucas Heinz Jörn
(86) Internationale Anmeldenummer: PCT/EP2013/067762
(87) Internationale Veröffentlichungsnummer: WO 2014/033148

(56) Entgegenhaltungen:
- WO-A1-00/45983
- DE-A1-102005 031 802

## Beschreibung

Die Erfindung betrifft eine Spannvorrichtung zum Einspannen eines zur Drehung um eine Drehachse bestimmten Maschinenteils, insbesondere eines Werkzeughalters eines Bohr-, Fräs-, oder Schleifwerkzeugs, in einer Auswuchtmaschine.

Spannvorrichtungen der angegebenen Art werden vornehmlich zum Einspannen von mit hoher Umdrehung antreibbaren Werkzeugen in einer Auswuchtmaschine verwendet. An das Auswuchten solcher Werkzeuge werden hohe Anforderungen gestellt, da unzureichend ausgewuchtete Werkzeuge zur Beeinträchtigung der Bearbeitungsqualität führen können. Um die hohen Anforderungen an die Auswuchtqualität erfüllen zu können, ist ein genaues zentrisches Spannen der auszuwuchtenden Werkzeuge mit Hilfe einer an der Spindel der Auswuchtmaschine angeordneten Spannvorrichtung erforderlich.

Aus WO 00/45983 A1 ist eine bei einer Auswuchtmaschine vorgesehene Spannvorrichtung gemäß demoberbegriff des Anspruchs 1 zur Einspannung einer Werkzeugaufnahme bekannt, bei der eine Grundkörpereinheit, die an einer um eine Drehachse drehend angetriebenen Maschinenspindel befestigt ist, eine zur Drehachse zentrische Aufnahmeöffnung aufweist, in die ein Kupplungsschaft der Werkzeugaufnahme axial einsteckbar ist. In der Aufnahmeöffnung ist eine Spannzange angeordnet, die an dem Kupplungsschaft angreift und durch eine relativ zur Grundkörpereinheit axial verstellbar an dieser geführte Zangenbetätigungseinheit betätigbar ist. Die Zangenbetätigungseinheit ist durch zwei Gleitflächenpaarungen doppelt an der Grundkörpereinheit geführt. Um eine hohe Führungsgenauigkeit zu erreichen, können diese Paarungen als Übergangspassungen ausgeführt werden, jedoch mit der Folge, dass die Zangenbetätigungseinheit nur sehr schwergängig gegenüber der Grundkörpereinheit verstellbar ist. Größere Toleranzen erlauben eine leichtgängigere Verstellung der Zangenbetätigungseinheit. Durch diese Toleranzen verursachte Rundlauffehler können aber in die Messergebnisse einfließen und die Reproduzierbarkeit der Messungen erheblich beeinträchtigen.

Zur Vermeidung dieser Nachteile ist es aus der genannten Veröffentlichung weiterhin bekannt, die Zangenbetätigungseinheit axial mittels einer Wälzkörperanordnung zur führen, deren Wälzkörper an Wälzflächen der Grundkörpereinheit und der Zangenbetätigungseinheit abwälzen. Die Wälzkörperanordnung soll eine leichtgängige, dennoch präzise axiale Führung der Zangenbetätigungseinheit ermöglichen, insbesondere wenn die Wälzkörper mit Vorspannung zwischen die Grundkörpereinheit und die Zangenbetätigungseinheit eingebaut sind.

Der Erfindung liegt die Aufgabe zugrunde, eine Spannvorrichtung der angegebenen Art zu schaffen, die leichtgängig betätigbar und kostengünstig herstellbar ist.

Nach der Erfindung wird diese Aufgabe durch eine Spannvorrichtung mit den in Anspruch 1 angegebenen Merkmalen gelöst. Vorteilhafte Ausgestaltungen der Spannvorrichtung sind in den weiteren Ansprüchen angegeben.

Die Spannvorrichtung nach der Erfindung umfasst eine Aufnahmeeinheit mit einer zur Drehachse zentrischen Aufnahmeöffnung, in die ein Kupplungsschaft eines Maschinenteils axial einsetzbar ist, eine in der Aufnahmeöffnung angeordnete Spannzange und eine relativ zur Aufnahmeeinheit axial bewegbar an dieser geführte Betätigungseinheit zur Betätigung der Spannzange, wobei die Betätigungseinheit einen in einer zentrischen Bohrung der Aufnahmeeinheit axial gleitend geführten Schaft, an einem Ende des Schafts einen die Spannzange betätigenden Spannkörper, am anderen Ende des Schafts einen Krafteinleitungskörper und mehrere Druckfedern aufweist, die zwischen der Aufnahmeeinheit und dem Krafteinleitungskörper angeordnet sind, und wobei die Druckfedern so angeordnet und/oder ausgelegt sind, dass die bei gespannter Spannzange auf den Krafteinleitungskörper einwirkenden Federkräfte den Krafteinleitungskörper in Bezug auf die Achse des Schafts asymmetrisch belasten.

Die Erfindung beruht auf der Erkenntnis, dass eine hohe Auswuchtgüte auch dann erreichbar ist, wenn die Spannvorrichtung in der Spannstellung, bei der die Unwuchtmessung durchgeführt wird, eine begrenzte Unwucht aufweist. Denn diese Unwucht kann exakt gemessen und bei der Erfassung der Gesamtunwucht von Spannvorrichtung und auszuwuchtendem Maschinenteil rechnerisch von dem Unwuchtanteil des Maschinenteils getrennt werden. Wesentlich für eine solche Vorgehensweise ist allerdings, dass die gemessene Unwucht der Spannvorrichtung, die beispielsweise durch eine Exzentrizität der leichtgängig gleitend und daher nicht vollkommen spielfrei geführten Betätigungseinheit verursacht werden kann, sich nicht nach jedem Spannvorgang ändert, sondern ihre Lage und Größe nach jedem Spannvorgang beibehält.

Nach der Erfindung wird dies durch ein in Bezug auf den Schaft asymmetrisches Belasten des Krafteinleitungskörpers mit Hilfe der Druckfedern erreicht. Die ortsfest zwischen der Aufnahmeeinheit und dem Krafteinleitungskörper angeordneten Druckfedern erzeugen dadurch ein auf den Krafteinleitungskörper und den Schaft einwirkendes Drehmoment, das bestrebt ist, den Krafteinleitungskörper und den Schaft um eine Achse zu drehen, die auf einer definierten, durch die Schaftachse gehenden Ebene senkrecht steht. Durch dieses Drehmoment wird der Schaft in einer in dieser Ebene liegenden Richtung an die Wand der zentrischen Bohrung der Aufnahmeeinheit angedrückt, in der er geführt ist, so dass er infolge des in der Führung vorhandenen Spiels eine definierte exzentrische Lage in der Bohrung der Aufnahmeeinheit einnimmt. Entsprechend erhält auch der mit dem Schaft fest verbundene Krafteinleitungskörper eine gleichermaßen exzentrische Lage. Diese durch die asymmetrische Kraftwirkung der Druckfedern stabile Exzentrizität verursacht eine definierte Unwucht, die in einem Testlauf erfasst und bei nachfolgenden Unwuchtmessungen mathematisch kompensiert werden kann. Die sich einstellende Exzentrizität ist in ihrer Größe durch das Spiel der Gleitführung und in ihrer Richtung durch die Anordnung und/oder Auslegung der Druckfedern festgelegt und daher bei jedem Spannvorgang reproduzierbar. Auf eine spielfreie Führung der Betätigungseinheit durch Wälzkörperanordnungen und enge Passungen kann daher verzichtet werden, wodurch sich eine deutliche Verringerung der Herstellkosten für die Spannvorrichtung erzielen lässt.

Üblicherweise werden die Druckfedern der Spannvorrichtung bei ihrem Einbau vorgespannt. Wenn die Betätigungseinheit der Spannvorrichtung in die Spannstellung bewegt wird, werden die Druckfedern noch über die anfängliche Vorspannung hinaus gespannt. Um auf einfache Weise eine asymmetrische Belastung des Krafteinleitungskörpers zu erzielen, kann nach der Erfindung wenigstens eine der Druckfedern stärker vorgespannt sein als die anderen. Die größere Federkraft der stärker vorgespannten Druckfeder kann durch eine geringere Einbaulänge oder durch eine größere Federlänge bei gegebener Einbaulänge erzielt werden.

Eine andere vorteilhafte Möglichkeit zur Erzielung der asymmetrischen Belastung kann auch in der Verwendung wenigstens einer Druckfeder mit einer gegenüber den anderen Druckfedern steileren Federkennlinie bestehen.

Nach einem weiteren Vorschlag der Erfindung kann die asymmetrische Belastung der Krafteinleitungskörpers durch eine unsymmetrische Anordnung mehrerer Druckfedern an dem Krafteinleitungskörper erzielt werden. In diesem Fall können die Druckfedern gleich sein und mit gleicher Vorspannung eingebaut werden.

Die Anzahl der Druckfedern kann gerade oder ungerade sein. Als besonders vorteilhaft hat sich eine Verwendung von fünf Druckfedern erwiesen, die in regelmäßigem Abstand an dem Krafteinleitungskörper angeordnet sind, wobei zwei nicht benachbarte Druckfedern eine gleiche höhere Vorspannung und die anderen Druckfedern eine gleiche niedrigere Vorspannung haben. Mit einer solchen Anordnung der Druckfedern wird eine recht zuverlässige Ausrichtung der Drehmomentkräfte und damit eine in engen Grenzen reproduzierbare Exzentrizität der Betätigungseinheit relativ zur Aufnahmeeinheit erreicht.

Die Druckfedern können bei der Spannvorrichtung nach der Erfindung in Bohrungen des Krafteinleitungskörpers und der Aufnahmeeinheit angeordnet sein, wobei durch unterschiedliche Bohrungstiefen der Unterschied in der Vorspannung der Druckfedern bewirkt werden kann.

Der Schaft der Betätigungseinheit kann vorteilhaft mit einem eine leichtgängige Bewegung gewährleistenden Spiel in Gleitbuchsen gelagert sein, die in der Bohrung der Aufnahmeeinheit angeordnet sind. Als Gleitbuchsen können selbstschmierende Gleitbuchsen verwendet werden.

Um die Betätigungseinheit entgegen der Kraft der Druckfedern pneumatisch oder hydraulisch in eine Lösestellung bewegen zu können, kann der Krafteinleitungskörper ein Kolben einer Kolben-Zylinderanordnung sein, die koaxial in der drehbaren Spindel einer Auswuchtmaschine angeordnet ist.

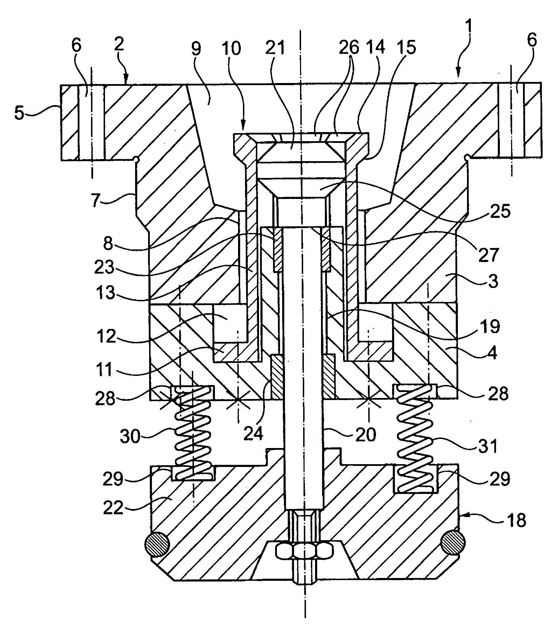

Die Erfindung wird nachfolgend anhand eines in der Zeichnung dargestellten Ausführungsbeispiels näher beschrieben. Die Zeichnung zeigt einen Längsschnitt durch eine Spannvorrichtung nach der Erfindung.

Die dargestellte Spannvorrichtung 1 ist dazu bestimmt in das offene Ende einer Hohlspindel einer Auswuchtmaschine eingesetzt zu werden. Die Spannvorrichtung 1 weist eine Aufnahmeeinheit 2 auf, die aus zwei durch Schrauben miteinander verbundenen Teilen, einem Aufnahmeteil 3 und einem Lagerteil 4, zusammengesetzt ist. Ein Flansch 5 mit Befestigungsbohrungen 6 an dem Aufnahmeteil 3 dient zur Befestigung der Aufnahmeeinheit 2 an der Stirnseite der Hohlspindel. Zur exakten Zentrierung gegenüber der Hohlspindel ist das Aufnahmeteil 3 an seiner Außenseite mit einer Zentrierfläche 7 versehen. Durch das Aufnahmeteil 3 erstreckt sich in axialer Richtung eine Durchgangsbohrung 8, die eine zentrische Aufnahmeöffnung 9 aufweist, die für die Aufnahme eines genormten Hohlsteilkegel-Kupplungsschafts eines Werkzeugs bestimmt ist. Selbstverständlich kann das Aufnahmeteil 3 auch mit einer anders gestalteten Aufnahmeöffnung zur Aufnahme von Kupplungsschäften anderer Form ausgebildet sein.

In der Durchgangsbohrung 8 befindet sich eine Spannzange 10, die mit einem Flansch 11 in einer in dem Lagerteil 4 ausgebildeten Ringausnehmung 12 durch Schrauben befestigt ist. Die Spannzange 10 weist einen auf einem Teil seiner Länge mehrfach in Längsrichtung geschlitzten Hülsenabschnitt 13 auf, der in die Aufnahmeöffnung 9 hineinragt und an seinem dortigen, geschlitzten Ende mit einem Spannflansch 14 versehen ist. Beim Spannen eines in die Aufnahmeöffnung 9 eingesetzten Kupplungsschafts übergreift der Spannflansch 14 mit einer Spannfläche 15 einen in der Öffnung des Kupplungsschafts ausgebildeten Spannwulst.

Die Betätigung der Spannzange 10 erfolgt mittels einer Betätigungseinheit 18, die einen in einer zentralen Bohrung 19 des Lagerteils 4 angeordneten Schaft 20 aufweist, der an seinem der Spannzange 10 zugeordneten Ende einen Spannkörper 21 trägt und an seinem entgegengesetzten, aus dem Lagerteil 4 herausragenden Ende fest mit einem scheibenförmigen Krafteinleitungskörper 22 verbunden ist. Zwischen dem Spannkörper 21 und dem Krafteinleitungskörper 22 ist der Schaft 20 mit einem zylindrischen Führungsabschnitt versehen und in Gleitbuchsen 23, 24 geführt, die in der Bohrung 19 angeordnet sind. Der Führungsabschnitt des Schafts 20 hat in den Gleitbuchsen 23, 24 ein Spiel der Größenordnung von 30 bis 50 µm, wodurch eine leichtgängige axiale Bewegbarkeit des Schafts 20 gewährleistet ist. Der Spannkörper 21 hat eine konische Spannfläche 25, die mit konischen Spannflächen 26 am geschlitzten Ende des Hülsenabschnitts 13 zusammenwirkt, um den Spannflansch 14 auseinander zu spreizen. An seinem dem Schaft 20 zugekehrten Ende bildet der Spannkörper 21 einen Anschlag 27, der die Bewegung der Betätigungseinheit 18 in einer den Abstand zwischen dem Lagerteil 4 und dem Krafteinleitungskörper 22 vergrößernden Richtung begrenzt.

In den einander zugekehrten Flächen des Lagerteils 4 und des Krafteinleitungskörpers 22 befinden sind in gleicher Anordnung einander gegenüber liegende Aufnahmebohrungen 28, 29, in denen vorgespannte, als Schraubendruckfedern ausgebildete Druckfedern 30, 31 angeordnet sind. Durch die Druckfedern 30, 31, wird die Betätigungseinheit 18 in der in der Zeichnung dargestellten Anschlagposition gehalten, in der sich der Spannkörper 21 mit dem Anschlag 27 an dem Lagerteil 4 abstützt.

Die Druckfeder 30 hat eine größere Windungszahl und eine kleinere Einspannlänge als die Druckfeder 31. Die Druckfeder 30 erzeugt daher eine höhere Vorspannkraft, durch die an dem Krafteinleitungskörper 22 ein Drehmoment erzeugt wird, das um eine zur Zeichnungsebene Senkrechte entgegen dem Uhrzeigersinn wirksam ist. Das Drehmoment wird mit Hilfe des Schafts 20 an den Gleitbuchsen 23, 24 abgestützt. Dies hat zur Folge, dass der Schaft 20 in Richtung der Druckfeder 31 an die Gleitbuchse 24 und in Richtung der Druckfeder 30 an die Gleitbuchse 23 angedrückt wird. Der Schaft 20 erhält hierdurch in der beschriebenen Spannsituation eine trotz des vorhandenen Gleitspiels eindeutig definierte, spielfreie Lage innerhalb der Gleitbuchsen 23, 24, die ausschließlich durch die asymmetrische Belastung des Krafteinleitungskörpers 22 mit Hilfe der Druckfedern 30, 31 bestimmt und daher bei jedem Spannvorgang wiederholbar ist.

Die vorstehend erläuterte und in der Zeichnung dargestellte Spannstellung der Betätigungseinheit 18 entspricht nicht genau der Spannstellung beim Spannen eines Kupplungsschafts. Vielmehr wird beim Spannen eines Kupplungsschafts die Betätigungseinheit 18 zunächst in Richtung der Aufnahmeöffnung 9 unter Spannen der Druckfedern 30, 31 so weit verschoben, bis der Spannkörper 21 mit seinem dicken Ende aus der Spannzange 10 heraustritt, so dass sich die Spannzange 10 federnd zusammenziehen und den Außendurchmesser des Spannflansches 14 verkleinern kann, um das Einsetzen des Kupplungsschafts in die Aufnahmeöffnung 9 zu ermöglichen. Diese Lösebewegung der Betätigungseinheit 18 wird üblicherweise durch Einwirken von pneumatischem Druck auf den in einem Zylinder angeordneten Krafteinleitungskörper 22 erzeugt. Zum anschließenden Spannen des eingesetzten Kupplungsflansches wird der auf den Krafteinleitungskörper 22 einwirkende Druck gesenkt und durch die Kraft der Druckfedern 30, 31 der Spannkörper 21 mit seiner Spannfläche 25 gegen die Spannflächen 26 der Spannzange 10 gedrückt. Hierdurch wird die Spannzange 10 gespreizt und der Kupplungsschaft in der Aufnahmeöffnung 9 festgespannt. In der gespannten Endstellung der Betätigungseinheit 18, in der alle Kräfte mit den von den Druckfedern 30, 31 erzeugten Kräften im Gleichgewicht sind, ist der Spannkörper 21 an der Spannzange 10 abgestützt, wobei der Anschlag 27 sich noch in einem Abstand von dem benachbarten Ende des Lagerteils 4 befindet. Die Federkraft der Druckfedern 30, 31 ist in dieser Spannstellung höher als in der oben beschriebenen Anschlagstellung, aber auch der Unterschied zwischen den Kräften der Druckfedern 30,31 und das dadurch hervorgerufene Drehmoment ist entsprechend höher, so dass die oben beschriebene radiale Andrückung des Schafts 20 an die Gleitbuchsen 23, 24 gleichermaßen erfolgt. Auf diese Weise befindet sich die Spannvorrichtung 1 im gespannten Zustand in einer eindeutig definierten Lage mit definierter Exzentrizität des Schafts 20 und des Krafteinleitungskörpers 22. Eine daraus resultierende Unwucht kann erfasst und bei der Unwuchtmessung kompensiert werden.

Bei dem vorstehend beschriebenen Ausführungsbeispiel sind aus Vereinfachungsgründen nur zwei Druckfedern gezeigt. Üblicherweise werden bei Spannvorrichtungen der beschriebenen Art jedoch eine größere Zahl von Druckfedern verwendet. Um die nach der Erfindung erforderliche asymmetrische Belastung des Krafteinleitungskörpers zu erreichen, ist es daher zweckmäßig, mehrere der vorhandenen Druckfedern mit einer höheren Vorspannung zu versehen. Als besonders vorteilhaft hat sich eine Anordnung von fünf Druckfedern erwiesen, die in regelmäßigem Abstand und in gleichem Abstand von der Achse des Schafts zwischen der Aufnahmeeinheit und dem Krafteinleitungskörper angeordnet sind, wobei wenigstens zwei, nicht unmittelbar benachbarte Druckfedern eine im Vergleich zu den anderen Druckfedern höhere Federkraft erzeugen. Die beiden stärkeren Druckfedern und die zwischen ihnen liegende dritte Druckfeder erzeugen hierbei ein eindeutig ausgerichtetes Drehmoment, durch welches die Betätigungseinheit in der Spannstellung wiederholgenau in eine spielfreie exzentrische Lage gebracht werden kann.

## Patentansprüche

1. Spannvorrichtung (1) zum Einspannen eines zur Drehung um eine Drehachse bestimmten Maschinenteils in einer Auswuchtmäschine umfassend
eine Aufnahmeeinheit (2) mit einer zur Drehachse zentrischen Aufnahmeöffnung (9), in die ein Kupplungsschaft des Maschinenteils axial einsetzbar ist,
eine in der Aufnahmeöffnung (9) angeordnete Spannzange (10) und eine relativ zur Aufnahmeeinheit (2) axial bewegbar an dieser geführte Betätigungseinheit (18) zur Betätigung der Spannzange (10),
wobei die Betätigungseinheit (18) einen axial in einer zentrischen Bohrung (19) der Aufnahmeeinheit (2) gleitend geführten Schaft (20), an einem Ende des Schafts (20) einen die Spannzange (10) betätigenden Spannkörper (21), am anderen Ende des Schafts einen Krafteinleitungskörper (22) und mehrere Druckfedern (30, 31) aufweist, die zwischen der Aufnahmeeinheit (2) und dem Krafteinleitungskörper (22) angeordnet sind, **dadurch gekennzeichnet, dass** die Druckfedern (30, 31) so angeordnet und/oder ausgelegt sind, dass die bei gespannter Spannzange (10) auf den Krafteinleitungskörper (22) einwirkenden Federkräfte den Krafteinleitungskörper (22) in Bezug auf die Achse des Schafts (20) asymmetrisch belasten.

2. Spannvorrichtung nach Anspruch 1, **dadurch gekennzeichnet, dass** die Druckfedern (30, 31) vorgespannt sind, wobei wenigstens eine der Druckfedern (30, 31) stärker vorgespannt ist als die anderen.

3. Spannvorrichtung nach einem der Ansprüche 1 oder 2, **dadurch gekennzeichnet, dass** die Federkennlinie wenigstens einer der Druckfedern (30, 31) von den Federkennlinien der anderen der Druckfedern (30, 31) verschieden ist.

4. Spannvorrichtung nach einem der vorhergehenden Ansprüche, **dadurch gekennzeichnet, dass** die Druckfedern (30, 31) unsymmetrisch an dem Krafteinleitungskörper (22) angeordnet sind.

5. Spannvorrichtung nach einem der vorhergehenden Ansprüche, **dadurch gekennzeichnet, dass** die Zahl der Druckfedern (30, 31) ungerade ist.

6. Spannvorrichtung nach einem der vorhergehenden Ansprüche, **dadurch gekennzeichnet, dass** fünf Druckfedern in regelmäßigem Abstand an dem Krafteinleitungskörper (22) angeordnet sind, wobei zwei nicht benachbarte Druckfedern eine gleiche höhere Vorspannung, die anderen eine gleiche niedrigere Vorspannung haben.

7. Spannvorrichtung nach einem der vorhergehenden Ansprüche, **dadurch gekennzeichnet, dass** die Enden der Druckfedern (30, 31) in Aufnahmebohrungen (28, 29) des Krafteinleitungskörpers (22) und der Aufnahmeeinheit (2) angeordnet sind.

8. Spannvorrichtung nach einem der vorhergehenden Ansprüche, **dadurch gekennzeichnet, dass** der Schaft (20) mit Spiel in Gleitbuchsen (23, 24) gelagert ist.

9. Spannvorrichtung nach einem der vorhergehenden Ansprüche, **dadurch gekennzeichnet, dass** der Krafteinleitungskörper (22) ein Kolben einer Kolben-Zylinderanordnung ist, die zum pneumatischen Bewegen der Betätigungseinheit (18) in eine Lösestellung ausgebildet ist.

## Claims

1. A clamping device (1) for clamping a machine part configured to rotate about an axis of rotation in a balancing machine, comprising a receiver unit (2) having a receiving opening (9) centrally located relative to the axis of rotation and adapted to receive axially therein a coupling shaft of the machine part,
a collet (10) arranged in the receiving opening (9), and
an actuator (18) guided on the receiver unit (2) for axial movement relative thereto for actuation of the collet (10),
wherein the actuator (18) includes a shaft (20) axially slidably guided in a centrally located bore (19) of the receiver unit (2), a clamping body (21) at one end of the shaft (20) for actuation of the collet (10), a load-applying body (22) at the other end of the shaft, and a plurality of compression springs (30, 31) arranged between the receiver unit (2) and the load-applying body (22), **characterized in that** the compression springs (30, 31) are arranged and/or configured in such a way that the spring loads acting on the load-applying body (22) with the collet (10) tightened are asymmetrical relative to the axis of the shaft (20).

2. The clamping device according to claim 1, **characterized in that** the compression springs (30, 31) are biased, with at least one of the compression springs (30, 31) being be biased a greater amount than the other springs.

3. The clamping device according to any one of the claims 1 or 2, **characterized in that** the spring characteristic of at least one of the compression springs (30, 31) differs from the spring characteristics of the other ones of the compression springs (30, 31).

4. The clamping device according to any one of the preceding claims, **characterized in that** the compression springs (30, 31) are non-symmetrically arranged on the load-applying body (22).

5. The clamping device according to any one of the preceding claims, **characterized in that** the number of compression springs (30, 31) is odd.

6. The clamping device according to any one of the preceding claims, **characterized in that** five compression springs are evenly spaced apart on the load-applying body (22), with two non-neighboring compression springs having an equal higher bias and the other compression springs an equal lower bias.

7. The clamping device according to any one of the preceding claims, **characterized in that** the ends of the compression springs (30, 31) are held in mounting bores (28, 29) of the load-applying body (22) and the receiver unit (2).

8. The clamping device according to any one of the preceding claims, **characterized in that** the shaft (20) is carried in slide bushings (23, 24) with allowance for play.

9. The clamping device according to any one of the preceding claims, **characterized in that** the load-applying body (22) is a piston of a piston-and-cylinder arrangement constructed for pneumatically moving the actuator (18) into a release position.

## Revendications

1. Dispositif de serrage (1) permettant le serrage d'une pièce de machine conçue pour tourner autour d'un axe de rotation dans une machine d'équilibrage comprenant une unité de réception (2) dotée d'une ouverture de réception (9) centrée par rapport à l'axe de rotation dans laquelle un arbre d'accouplement de la pièce de machine peut être inséré axialement,
une pince de serrage (10) disposée dans l'ouverture de réception (9) et
une unité d'actionnement (18) guidée par rapport à l'unité de réception (2) en étant mobile axialement sur cette dernière et destinée à actionner la pince de serrage (10),
l'unité d'actionnement (18) comprenant une tige (20) guidée coulissante axialement dans un alésage centré (19) de l'unité de réception (2), un corps de serrage (21) à une extrémité de la tige (20) qui actionne la pince de serrage (10), un corps d'application de force (22) à l'autre extrémité de la tige, et plusieurs ressorts de pression (30, 31) qui sont disposés entre l'unité de réception (2) et le corps d'application de force (22), **caractérisé en ce que** les ressorts de pression (30, 31) sont disposés et/ou configurés de telle manière que les forces élastiques agissant sur le corps d'application de la force (22) lorsque la pince de serrage (10) est sous contrainte sollicitent l'élément d'application de force (22) de manière asymétrique par rapport à l'axe de l'arbre (20).

2. Dispositif de serrage selon la revendication 1, **caractérisé en ce que** les ressorts de pression (30, 31) sont précontraints, au moins l'un des ressorts de pression (30, 31) étant contraint plus fortement que les autres.

3. Dispositif de serrage selon l'une des revendications 1 ou 2, **caractérisé en ce que** la courbe caractéristique de ressort d'au moins l'un des ressorts de pression (30, 31) est différente des courbes caractéristiques de ressort des autres ressorts de pression (30, 31).

4. Dispositif de serrage selon l'une des revendications précédentes, **caractérisé en ce que** les ressorts de pression (30, 31) sont disposés de manière asymétrique sur le corps d'application de force (22).

5. Dispositif de serrage selon l'une des revendications précédentes, **caractérisé en ce que** le nombre de ressorts de pression (30, 31) est impair.

6. Dispositif de serrage selon l'une des revendications précédentes, **caractérise en ce que** cinq ressorts de pression sont disposés à intervalle régulier sur le corps d'application de force (22), deux ressorts de pression non voisins présentant une précontrainte plus élevée identique, les autres présentant une précontrainte plus basse identique.

7. Dispositif de serrage selon l'une des revendications précédentes, **caractérisé en ce que** les extrémités des ressorts de pression (30, 31) sont disposées dans des alésages de réception (28, 29) du corps d'application de force (22) et de l'unité de réception (2).

8. Dispositif de serrage selon l'une des revendications précédentes, **caractérisé en ce que** la tige (20) est logée avec un jeu dans des douilles de glissement (23, 24).

9. Dispositif de serrage selon l'une des revendications précédentes, **caractérisé en ce que** le corps d'application de force (22) est un piston d'un ensemble piston-cylindre conçu pour le déplacement pneumatique de l'unité d'actionnement (18) dans une position de desserrage.
